# EUROPEAN PATENT APPLICATION

(11) **EP 4 779 548 A1**
(43) Date of publication of application: **22.07.2026**
(21) Application number: 25152013.6
(22) Date of filing: 15.01.2025
(51) Int. Cl.: G06Q 20/36, G06Q 20/06, G06Q 20/38, G06Q 20/40, G06Q 20/02, H04L 9/00

(54) **SECURE TOKEN WALLET AND TOKEN REGISTER**

(71) Applicant: Giesecke+Devrient advance52 GmbH, 81677 München (DE)
(72) Inventor: Sequeira, Severino, 81677 Munich (DE)
(74) Representative: Giesecke+Devrient IP

(57) **Abstract**

There is provided a secure token wallet (1) of a token system (10) including multiple token wallets (1, 2) and a token register (9). The secure token wallet, comprising
- a token exchange unit (11) configured for exchanging a token with another token wallet, wherein in an offline token exchange (100; 100d) the token exchange unit (11) receives a wallet information of the other token wallet (2) and receives a token (15) from the other token wallet (2); and
- a storage unit (12) configured for storing the received token (15) and token registration data (16d) to be sent to the token register (9).

The token exchange unit (11) is configured to select a first wallet information share (21d) from wallet information shares (21a-21d), wherein the wallet information (21) of the other token wallet (2) is derivable only based on two or more of the wallet information shares (21a-21d). The token registration data (16d) stored for the received token (15) comprises the first wallet information share (21d).

## Description

The invention relates to a secure token wallet receiving a token in an offline token exchange and to a token register storing token information for tokens of a token system including multiple token wallets.

In the field of digital money systems account-based systems and token-based systems form different approaches well known in the art.

Many of the recent account-based systems use blockchains, wherein ownership of the digital money is transferred within the blockchain, e.g. by changing the assignment from one account to another account.

In token-based digital money systems monetary value tokens are stored in secure token wallets and are transferred between the secure token wallets. For example EP 3 671 514 B1, WO 2020/212331 A1, WO 2021/170646 A1, WO 2023/011758 A1 and WO 2023/011761 A1 disclose different aspects of such systems.

EP 4 113 471 B1 teaches a token register in which the tokens of a token owner may be registered anonymously, with a pseudonym of the token owner or with an identity of the token owner. According to EP 4 425 405 A1 the wallet identifier of a token wallet may be derived based on a identity information of the wallet owner, such as an identity card number, in a way such that the wallet identifier does not disclose the owner identity, but that only a dedicated central system entity knowing a secret inverse-derivation function may access the owner identity based on the wallet identifier.

WO 2022/008322 A1 shows a token exchange system comprising token wallets, a token register for anonymously registering valid tokens and a transaction register. A transaction data set for a token exchange is encrypted by two or more keys of dedicated anti-fraud entities, such as a token issuer or a government entity, before being sent to the transaction register. The identity of the token wallets included in the transaction data thus is access protected for a common access of the two or more of the dedicated anti-fraud entities, since their respective decryption keys are required for decryption of the stored data.

WO 2022/008322 A1 discloses the preamble portion of present claim 1.

According to an object of the invention data protection shall be improved in a token system, particularly data protection for a wallet information may be improved, preferably with remaining or increased system security and/or with remaining or decreased protection effort.

The above-identified objectives are solved by the subject matter of the independent claims. Further advantageous embodiments are described in the dependent claims.

According to an aspect of the present invention, there is provided a secure token wallet of a token system including multiple token wallets and a token register, the secure token wallet comprising:
- a token exchange unit configured for exchanging a token with another token wallet, wherein in an offline token exchange the token exchange unit receives a wallet information of the other token wallet and receives a token from the other token wallet; and
- a storage unit configured for storing the received token and for storing token registration data to be sent to the token register.

According to the present solution the token exchange unit is configured to select a first wallet information share from wallet information shares. A wallet information of the other token wallet is derivable only based on two or more of the wallet information shares. The token registration data stored for the received token comprise the first wallet information share.

Since only the first wallet information share will be provided to the token register, the wallet information of the other token wallet itself may not be derived in the token register for standard cases (normal token exchanges /no double spending). Only after a double spending of the token, the token register will receive a second wallet information share of the wallet information shares for the token.

Security of the solution is improved by the share selection being performed in the secure token wallet receiving the token, particularly when compared to a solution in which the other (sending) token wallet would select the wallet information share of its own wallet information.

In order to possibly improve the overall understanding, the following two aspects shall be mentioned.

First, the wallet information as such is not a secret information to be protected (but a public information). In an offline token exchange for example, the wallet information of the other token wallet may be received at least by any token wallet of the token system and typically still within an authentication phase.

Second, the token wallets of the token system enabled for offline token exchanges generally can be assumed not to perform double-spending of tokens. The token wallets are secured/tamper-proof/ security certified token wallets. Nevertheless, theoretically a double spending by the token wallet could be triggered, for example triggered by an attacker having invested more effort than assumed for the security certification. Within the present text, a first (secured) token wallet of an offline token exchange is referred to as the secure token wallet and a second (secured) token wallet is referred to as the other token wallet.

The token exchange unit of the secure token wallet may be configured to generate the wallet information shares and to select the first wallet information share from the generated wallet information shares or may be configured to select the first wallet information share from wallet information shares (to be generated or generated in the other token wallet) and to receive the selected first wallet information share from the other token wallet.

Both variants ensure that the share selection is performed in the secure token wallet. Basically, the first variant may be preferred from a security perspective. In the second variant, theoretically a token exchange could be externally interrupted when the token wallet is asked for the "wrong" wallet information share. However, the second variant may be preferred from a performance perspective, particularly if one or more steps of the wallet information share generation can be performed in advance and/or if results of a of the wallet information share generation step may be reused in the other token wallet.

The wallet information of the other token wallet typically uniquely identifies the other token wallet and/or uniquely identifies the owner of the other token wallet. Hence, the wallet information may be a wallet identifier of the other token wallet, a certificate identifier of a certificate of the other token wallet, a public wallet authentication key of the other token wallet, a full user name, a user identity, a user communication (mail) address or a user communication (phone) number. A hash value of these examples may also form the wallet information of the other token wallet. The wallet information shall at least be unique in the token system.

The wallet information can preferably be included in or be derived from a (received) certificate of the other token wallet. The certificate of the other token wallet may be received in the secure token wallet, particularly in an authentication phase of the token exchange, wherein preferably a mutual authentication of the token wallets is performed.

The wallet information shares generated preferably are token dependent wallet information shares. Accordingly, if another token is exchanged, other wallet information shares will be generated for the same wallet information. The wallet information shares generated preferably are exchange independent. Accordingly, if the same token is exchanged (received) in another token exchange (double spending token exchange), the same wallet information shares will be generated for the wallet information. The selected wallet information share of the wallet information shares however will be different in the double spending token exchange. The wallet information shares generated preferably are token dependent and/or exchange independent. In alternative variants, the wallet information shares are token independent wallet information shares.

Furthermore, in the offline token exchange the secure token wallet may receive a second token (in addition to the received first token). For each received token the token registration data may comprise a wallet information share of respective wallet information shares. The token registration data may, for example, comprise the first wallet information of first wallet information shares for the received first token and a second (or further) token wallet information share of second (or further) wallet information shares for the received second (or further) token.

In preferred variants the wallet information of the other token wallet is derivable only based on p wallet information shares out of q wallet information shares, wherein p<q preferably wherein p=2 or 3. The number q of wallet information shares is preferably greater than 5, more preferably greater than 10 or even greater than 20. A high number q of wallet information shares reduces the likelihood that the same wallet information share will be selected in a subsequent double-spending token exchange. Generally, p may be three, particularly if the other token wallet selects (and transmits to the token register) another of the wallet information shares generated for the wallet information of the other token wallet. For increased security however, p should be 2.

In alternative variants the wallet information of the other token wallet is derivable only based on all wallet information shares. The number q of wallet information shares preferably is below 10 and above 2 (3 <= q < 10), more preferably above 3 and below 8. The wallet information shares preferably are token-independent wallet information shares.

The wallet information shares may be generated by a secret sharing scheme, preferably a threshold secret sharing scheme, more preferably a p-out-of-q secret sharing scheme, particularly a 2-out-of-q secret sharing scheme. The secret sharing algorithm preferably is a Shamir Secret Sharing Scheme, including variants of this scheme, or a multi-linear secret sharing scheme (cf. "Multi-linear Secret-Sharing Schemes", 2014, Beimel et al.) or a CRT-based threshold sharing scheme.

The wallet information shares are preferably generated based on the wallet information and a share-generating seed.

The share-generating seed preferably is a token dependent share-generating seed. For example, a token individual data element, such as a token reference and/or a token public key or the token, may form the share generating seed or may be used to derive the share generating seed. Preferably, a hash value of a token individual data element or of the token is used as the share-generating seed. Accordingly, if another token is received in the token exchange, another share-generating seed is used. The share-generating seed preferably is an exchange independent share-generating seed. Accordingly, if the token is received in another token exchange (double spending token exchange) of the other token wallet, e.g. between the other token wallet and the secure token wallet or a third token wallet, the same share-generating seed is used for generating the wallet information shares. Thus the share-generating seed may be token dependent and/or exchange independent.

In preferred variants the first wallet information share is selected from the wallet information shares pseudo-randomly and/or based on a share-selection seed. In particular, the share-selection seed may be an exchange dependent value, such as a session key or a session random number or a session number of the offline token exchange, and/or a pseudo-random number, which is generated based on a pseudo-random number or corresponds to a pseudo-random number generated in at least the secure token wallet, optionally in the secure token wallet and the other token wallet.

The token registration data for the received token(s) typically include a token value and/or a wallet information share, and preferably a token reference.

The token registration data presently enable the secure token wallet to request registration of the first wallet information share for the received token in the token register. Optionally, the first wallet information share is registered for the first token received from the other token wallet) and for one or more further token created in the other token wallet and/or received from the other token wallet. Alternatively, for one or more further (second, third, ...) token created in the other token wallet and/or received from the other token wallet, a further (second, third, ...) token wallet information of respective further (second, third, ...) token wallet information shares for the wallet information of the other token may be included in the registration data.

Token registration data may comprise one or more registration requests, preferably registration replacement requests. The token registration data/ each registration replacement request may enable the token wallet to request registration replacement of m registered input token by registration of n unregistered output token in the token register. For example, WO 2020/212331 A1, WO 2023/011761 A1 or WO 2024/027869 A1 disclose aspects or improvements of registration replacement requests, wherein WO 2023/011761 A1 or WO 2024/027869 A1 discuss registration data comprising multiple registration replacement requests.

The tokens may be referred to as monetary value tokens or digital money tokens. The token system may be a central bank digital currency (CBDC) system and/or the token may be a CBDC token.

According to another aspect of the present invention, there is provided a token register of a token system including multiple secure token wallets. Multiple or all of the secure token wallets may be secure token wallets as described above. The token register comprises a token list storing token information, a registration unit configured for receiving registration data including token information to be stored in the token list, and a wallet information derivation unit configured for deriving a wallet information of a token wallet based on the token information stored for a token in the token list.

In the present solution, after receiving first registration data of a first token exchange a first wallet information share of wallet information shares is stored in the token list for a token, wherein the wallet information of the other token wallet is derivable only based on two or more of the wallet information shares. The wallet information derivation unit derives the wallet information after receiving second registration data, including a second wallet information share of the wallet information shares for the token, of a second, offline token exchange.

The present solution avoids the need for a (complex) key management, including key updates and/or a remote key distribution and/or an initial key distribution.

The token register may be adapted for receipt of the registration data described above and for wallet information derivation based thereon. The multiple secure token wallets may be secure token wallets as described above.

Token information of a token is stored in the token list and may comprise first wallet information share and/or a token value and/or a token reference.

The wallet information of a token wallet is derivable in the token register (preferably only) after a double spending of the token by the token wallet, particularly after a second sending of the token and/or after a token creation based on the sent token and/or after a second token creation based on the token. Hence, three types of double-spending by a token wallet can be handled by the present approach: the same token is sent more than once (typical double spending), the same token is sent first and afterwards used for creating a new token (hybrid double spending) and the same token is used more than once for creating a new token (double replacement). Generally, the wallet information cannot be derived in the token register in case of normal token exchanges.

The registration data may comprise one or more registration replacement requests. The registration unit replaces in the token list the token information of at least one input token - of a registration replacement request included in the registration data - by the token information of at least one output token of the registration replacement request. In preferred variants the token register comprises a token value list, thus including the token value for the token, and/or a valid token list, i.e. listing the valid tokens of the token system. The token register may further include the first wallet information share and/or include a separate wallet information share list (or token creator list) including a wallet information share information per token.

The token register can be a token creator register registering a wallet information share for the wallet information of the token wallet creating the token. A token creator register may be provided in addition to a valid token register (token reference register). The registration unit may receive registration data from a valid token register and/or (directly) from one of the token wallets.

Preferably, the token (creator) register includes a list (failed registration list) of wallet information shares from incorrect registration data. The token register adds the wallet information of registration data (particularly of a registration replacement request) to the failed registration list, if the requested token registration (replacement) fails. For example, if the same input token is used in different registration replacement requests.

In variants the wallet information of a token wallet is derivable in the token register only based on all (q) wallet information shares. The wallet information shares in these variants preferably are token-independent wallet information shares. The number q of wallet information shares in these variants preferably is below 10 and above 2 (3 <= q < 10), more preferably above 3 and below 8 (3 < q < 8). The token register checks, if the failed registration list contains a complete set of wallet information shares. For example this check is performed when adding a new wallet information share to the failed registration list. The number of records in the failed registration list can assumed to be sufficiently low, such that combinations of the listed wallet information shares can be systematically created in the step of checking, if a complete set of wallet information shares exists. q is selected to be above 2 (or 3) such that more than two failed registrations are required. q is selected to be below 10 (or 8) such that the number of possible combinations still can be handled and/or that the number of failed registrations required - for collecting all wallet information shares (due to the (quasi-random/random) selection of the wallet information share) - remains limited. In these variants a double-spending may not be detected and/or is not required. In these variants, e.g. defective or attacked, token wallets creating too many incorrect registration data will be detected. The wallet information of token wallets creating normal registration data remain protected.

According to still another aspect of the present invention, there is provided a system comprising multiple secure token wallets as described above and a token register as described above, particularly a valid token register and/or a token creator register.

EP 3 671 514 B1, WO 2020/212331 A1, WO 2021/170646 A1, WO 2023/011758 A1, WO 2023/011761 A1 and WO 2024/027869 A1 describe possible aspects of such (monetary value) token systems, their system units, monetary value tokens and the token exchanges.

In the following, the invention or further embodiments and advantages of the invention are explained in more detail based on drawings, wherein the drawings describe only some of the possible embodiments of the invention. At least elements drawn with dashed lines are considered to form optional elements.

The drawings are not to be regarded as true to scale, and individual elements of the drawings may be shown in exaggeratedly large or exaggeratedly simplified form.
Fig. 1 shows a known token exchange system including multiple secure token wallets and a token register;
Fig. 2 shows a secure token wallet storing token registration data including a wallet information share;
Fig. 3 shows a token register including a token list storing a wallet information share per token;
Fig. 4 shows data elements included in the registration data of a secure token wallet; and
Fig. 5 shows a registration process in a token register receiving a wallet information share for a token.

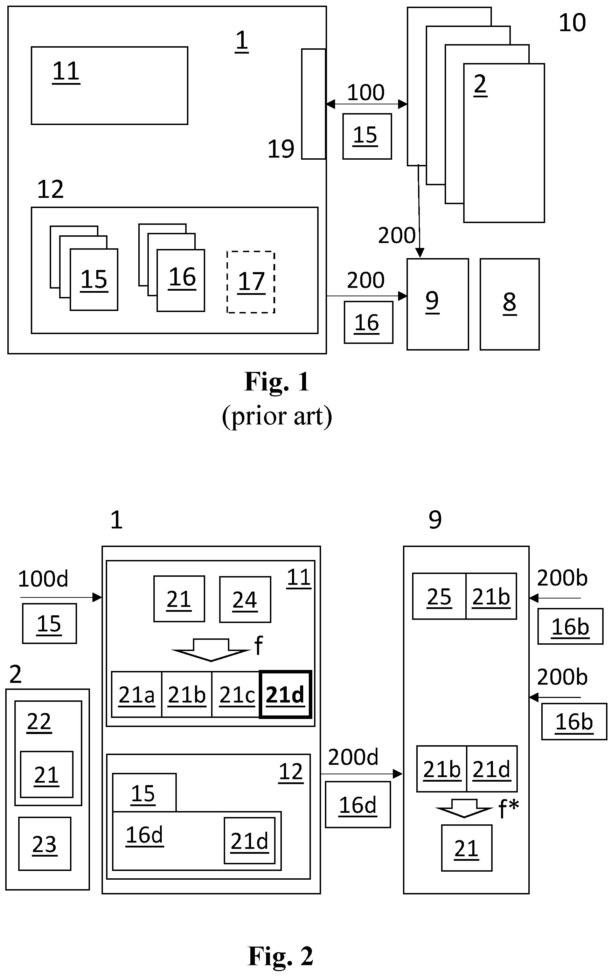

A token system 10 illustrated in Fig. 1 comprises secure token wallets 1, 2 and a token register 9. The token register 9 preferably is a token reference register, particularly including a list of token references valid in the token system 10.

The secure token wallet 1 comprises a token exchange unit 11 and a storage unit 12. The secure token wallet 1 stores one or more tokens 15 and one or more registration data 16 in the storage unit 12.

The secure token wallets 1, 2 are configured to exchange (send or receive) and store tokens 15 of the token system 10 in a token exchange. The token exchange can be an offline token exchange 100. The token exchange unit 11 in the offline token exchange 100 may receive from another token wallet 2 a token 15 and registration data 16 and store the token 15 and the registration data 16 in the storage unit 12.

For the offline token exchange 100 the other token wallet 2 creates the token 15 having a required monetary value, e.g. 22 digital Euro, based on an existing/input token of the other token wallet 2. The registration data 16 sent for the token 15 comprises at least one registration replacement request for the token register 9. The registration replacement request requesting the token (reference) register 9 to replace registration of the input token of the other token wallet 2 by registration of the token 15 (output token). A registration replacement request may comprise data elements (token references and/or token values and/or token signature) for one or more input tokens as well as one or more output tokens. The registration data 16 of the token 15 may comprise the registration replacement request for the token 15 as well as registration replacement requests of previous tokens, such as the registration replacement request of the input of the other token wallet 2.

Of course, the secure token wallet 1 may alternatively send a token 15. It would create the token 15 to be sent and a registration replacement request and send the token 15 and the registration data 16 including the registration replacement request (or send a stored token 15 and its registration data 16). In the offline token exchange 100 the token 15 is exchanged via a local interface unit 19 of the secure token wallet 1 directly (or locally) from/to the other token wallet 2.

Typically, the offline token exchange 100 comprises an authentication step at least from the sending token wallet 1 or 2, preferably comprises a mutual authentication of the token wallets 1, 2.

After one or multiple offline exchanges 100, the secure token wallet 1 or the other token wallet 2 may - at an arbitrary point of time - in a token registration 200 register the token 15 in the token register 9 by sending the token registration data 16 to the token register 9.

The tokens 15 preferably are monetary value tokens. A token issuer unit 8 of the token system 10 may initially issue (and register) tokens 15. The token issuer may be a central bank or a commercial bank. Accordingly the tokens 15 can be central bank digital currency (CBDC) tokens.

The secure token wallet 1 optionally may store exchange log data 17, e.g. including the wallet identifiers of the token wallets of the offline token exchange 100 and the (monetary) value of the token(s) 15 exchanged in the offline token exchange 100 and possibly further data elements such as a timestamp or an exchange number. Exchange log data 17 would be sent from the token wallets 1, 2 to an exchange log register (not shown) of the token system 10. This approach however fully discloses to the token system 10, which token wallets have exchanged tokens with each other and which values have been exchanged.

Fig. 2 illustrates a secure token wallet 1, a token register 9 and a token system comprising the secure token wallet 1, other token wallets 2 and the token register 9.

The secure token wallet 1 comprises a token exchange unit 11 and a storage unit 12. The secure token wallet 1 stores one or more tokens 15 and one or more registration data 16d in the storage unit 12.

The token wallets 1, 2 each comprise a wallet information 21, such as a wallet identifier or a user identifier. The wallet information 21 of the token wallet 1, 2 uniquely identifies the token wallet 1, 2 in the token system 10. A wallet certificate 22 may be provided for the wallet information 21, which may include and/or certify the wallet information 21.

In an offline token exchange 100d the secure token wallet 1 receives a token 15 and the wallet information 21 from the other (secure) token wallet 2.

The token exchange unit 11 is configured to select a first wallet information share 21d from multiple wallet information shares 21a-21d. The wallet information 21 can be derived only based on two or more of the wallet information shares 21a-21d. The token registration data 16d stored for the received token 15 comprises only the first wallet information share 21d. Hence, the registration data 16d stored in the secure token wallet 1 for sending them to the token register 9, do neither comprise the wallet information 21 nor enable derivation thereof. Accordingly, when the token register 9 - at an arbitrary point of time - in token registration 200d receives the registration data 16d the wallet information 21 is not available for the token register 9.

If however at least a second wallet information share 21b of the wallet information shares 21a-21d for the wallet information 21 of the other token wallet 2 is stored in the token register 9, the wallet information 21 of the other token wallet 2 can be derived based thereon. Hence, in case of normal token exchanges 100 the wallet information remains unavailable for the token register 9. However, in case of a double-spending of the token 15, the wallet information 21 of the other token wallet 2 (the double-spending token wallet) can be derived in the token register 9.

Fig. 2 shows a generation function f (used in the token wallet) and a derivation function f* (used in the token register 9).

As indicated in Fig. 2 the wallet information shares 21a-21d may be generated in the secure token wallet 1 and/or in the token wallet 2 (not shown). In the preferred first variant the secure token wallet 1 selects a wallet information share 21d of the generated wallet information shares 21a-21d. It may store the selected wallet information share 21d in the registration data 16d and/or send the selected wallet information share 21d to the other token wallet 2. The other token wallet may then incorporate the selected wallet information share 21d into the registration data 16d, e.g. before creating a (token) signature for the registration data 16d and/or for sending signed registration data 16d to the secure token wallet 1. In the second variant the secure token wallet 1 selects the wallet information share 21d to be generated and to be sent by the other token wallet 2 (within the registration data 16d or in addition to the rest of the registration data 16d). Secure token wallet 1 may for example inform the other token wallet 2 about the selection: please send "share number 4" of the generated wallet information shares. The other token wallet 2 sends the generated wallet information share 21d to the secure token wallet 1, preferably in the registration data 16d and/or after signing the wallet information share 21d, e.g. upon a signature of the registration data 16d. Optionally, the secure token wallet 1 also generates wallet information share for verification of the received wallet information share.

The secret share generating scheme f may be an p-out-of-q share generating scheme, such as Shamir's secret share generating scheme, q is the number of wallet information shares. p is the number of wallet information shares required to derive the wallet information therefrom (p<=q, preferably p= 2 or 3). q is selected to be above 10 (p>10) in order to ensure a high likelihood that different shares are selected upon two selections in token wallets of the token system 10.

Typically, the token wallets 1, 2 exchange and verify their wallet certificates 22 mutually in an authentication phase of the offline token exchange 100d. The wallet information 21 is thus a certified data element and cannot be changed by the other token wallet 2.

The token exchange unit 11 may generate the wallet information shares 21a-21d based on the received wallet information 21 of the other token wallet 2 and a share generating seed 24.

The share generating seed 24 is exchange independent (same seed used in different token exchanges). The share generating seed 24 preferably however is token dependent, e.g. a token individual token data element or data derived therefrom (derived by hashing and/or signing). For example, a token reference or the token or a signature thereof may be used. Optionally, a signature created with the wallet key 23 or a token individual token secret is generated in the other token wallet 2 and received in the secure token wallet 1, wherein the signature may serve as the share generating seed 24 or may sign the share generating seed 24. In the preferred mode the share generating seed 24 is a secret token individual data element (or is derived therefrom). The share generating seed 24 in a Shamir's secret sharing scheme presently would be used to construct the polynomial (coefficients), which otherwise would be randomly constructed.

In an alternative variant (not shown) q out of q wallet information shares would be required and the wallet information share would be a token independent wallet information share. These variants may enable the token register to identify the wallet information of a token wallet creating too many incorrect registration data. In a very simple example for this variant the wallet information share may be the first, second, ... or q-th part of the wallet information.

The token register 9 will receive the registration data 16d in the token registration 200d. Normally, the token register 9 would at least store the wallet information share 21d, e.g. in a token creator list or a valid token list, preferably for a token reference 25 of the token 15.

In the example of Fig. 2 however, in a previous token registration 200b other token registration data 16b including a first wallet information share 21b have been received in the token register 9. The token register thus already stores the first wallet information share 21b. The first wallet information share 21b is stored for the token reference 25 of the token 15. The token 15 thus already has been received by another token wallet (not shown) in a first token exchange and registered in the token register by the first step 200b. As also indicated in Fig. 2, the token register 9 typically receives/may receive the same registration data 16b from the other token wallet of the first offline token transaction (not shown). A further receipt of the same registration data 16b or the same registration replacement request is a normal process in the token register 9 (no error, no registration failure only - since it is only a matter of who sends the valid request first). If in the token registration 200d, a second wallet information share 21d is received in the token register 9 for the same token 15, a double-spending has occurred. The token register 9 detects the wallet information share 21d to be a second wallet information share and derives the wallet information 21. Based on the first and the second wallet information share 21b, 21d the token register 9 derives the wallet information 21.

In the variant not shown, the token register would need all (q) wallet information shares. The token register 9 in token registration 200d would detect a failed registration (e.g. since token 15 was already registered by its token reference 25 in a list of valid tokens) and add the wallet information share 21d to a failed registration list. Attempts to derive a valid wallet information from combinations of the stored wallet information shares will only be successful, if all wallet information shares 21a-21d are in the stored failed registration list. Hence, at least q-1 failed registrations would be required. However, due to the selection process (same share may be selected again) more than q the wallet information will only be derive after more than q failed registrations.

Once the wallet information of a token wallet has been derived, different countermeasures may be taken in the token system 10 (for the other token wallet 2). For example, the token wallet may be replaced (or blocked) and/or the certificate of the token wallet may be revoked and/or the identified user (or the wallet issuer) may be informed.

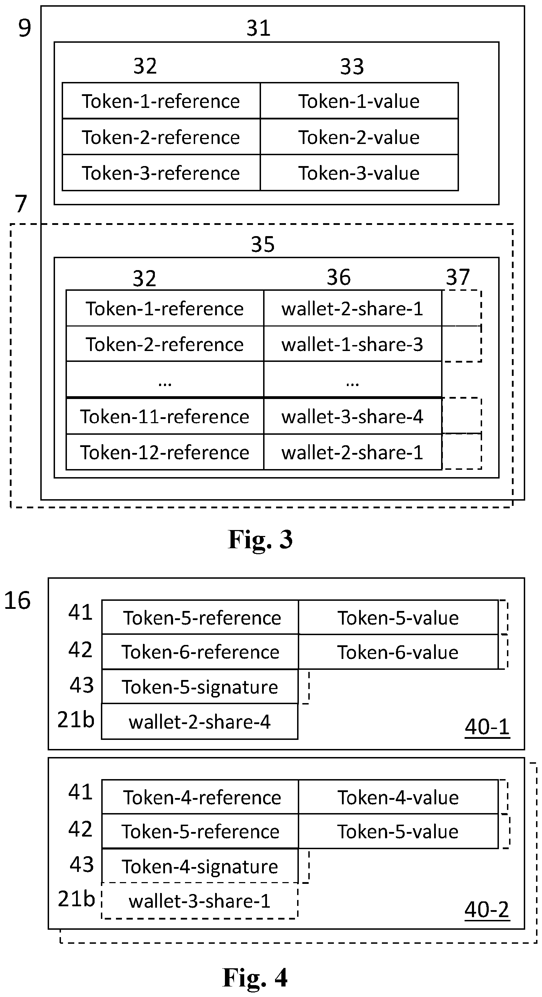

Fig. 3 illustrates an example of a valid token list 31 and a token creator list 35 in a token register 9.

In the valid token list 31 the token references 32 of the tokens currently valid in the token system are stored together with the token value 33 of the corresponding token. For example, for the token token-1 the token reference Token-1-reference and the token value Token-1-value are stored. The token reference may be a token individual public key derived from a token individual secret key of the token. The token (reference) register 9 does not store the token individual secret of the token, which is only stored in the token wallet.

The token creator list 35 of the token register 9 contains the token references 32 of the tokens created in a token wallet and a corresponding wallet information share 36 of the wallet information of the token wallet. For example, for the valid token token-2 the list 35 stores the token reference Token-2-reference and a first share of the wallet information of the token wallet-2 - having created to token-2 in an offline token exchange. The token creator list 35 also includes records for tokens, such as token-11, which are not valid in the token system anymore.

The wallet information shares 36 may also be stored in the valid token list 31. A separate token creation list 35 thus is an option only.

Another option indicated in Fig. 3 is that the token creator list 35 could be stored in a token creator register 7 (or wallet information share register). The token (reference) register 9 would include the list 31 of valid token references only.

Both lists optionally may include further data elements (per record in the list). In particular, the token creator list 31 may include a timestamp 37. The timestamp 37 or a similar data element may be used to selectively delete old records from the token creator list.

Fig. 4 illustrates an example of registration data 16. The registration data 16 include one or more registration replacement requests 40-1, 40-2. A registration replacement request requests the token register to replace registration of one or more (m) registered input tokens by registration of one or more (n) unregistered output tokens.

The registration replacement request 40-1, 40-2 comprises input token data elements 41, particularly including the token reference and the token value of the input token(s), and output token data elements 42, particularly including the token reference and the token value of the output token(s). The registration replacement request typically further comprises a replacement signature 43. The replacement signature 43 confirms the other data elements 41,42 (optionally 21b). Preferably, a token signature, such as Token-5-signature, is created by the secret data element of the input token, in particular for each input token.

A wallet information share 21b is an additional data element of the registration replacement request 40-1, 40-2. Hence, in the example illustrated, according to registration replacement request 40-1, wallet-2 has created (at least) Token-6 based on (at least) Token-5, wherein wallet-2-share-4 is included in the registration data 16 for Token-6. According to registration replacement request 40-2, the Token-5 was created by wallet 3 based on (at least) Token-4, wherein the registration data 16 comprises wallet-3-share-1 for Token-5. The replacement signature 43 may or may not be also calculated over the wallet information share 21b.

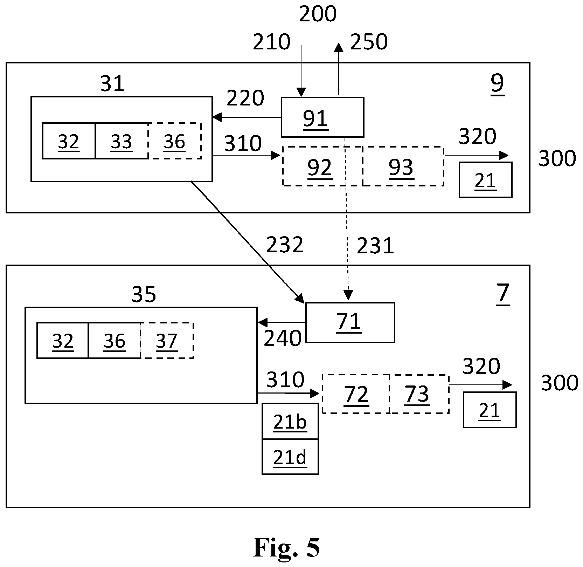

Fig. 5 illustrates processes 200, 300 in a token (reference) register 9 and in a token creator register 7 of a token system 10.

The token (reference) register 9 includes the valid token (reference) list 31 including token references 32 and token values 33 of valid tokens. Optionally, a wallet information share 36 may be stored in a registration record of the valid token.

The token register 9 comprises a token registration unit 91 and optionally a conflict detection unit 92. In addition it may comprise a wallet information derivation unit 93.

The token creator register (or wallet information share register) 7 stores the token creator (or wallet information share) list 37. The token creator list 35 includes at least a wallet information share 36 per record and optionally the token reference 32 of the token.

The token creator register 7 comprises a token creator registration unit 71 and optionally a conflict detection unit 72. In addition it may comprise a wallet information derivation unit 73.

In the token registration process 200, at least one token replacement request is received 210 by the token register 9. The token registration unit 91 checks the token replacement request, e.g. by verifying a replacement signature and/or by verifying that no additional value is created and/or that the input token reference(s) is stored in the valid token list 31. After successfully checking the request or after one or more further steps 220-240, the token register sends 250 a registration confirmation to the token wallet. In step 220 the token reference of the output token(s) is stored in the valid token list 31 and the record of the input token(s) is preferably deleted from the list 31 (or deactivated in the list 31).

In first variants the wallet information share 36 is stored in the record of the input token in the valid token list 31 in step 220. In second variants the wallet information share 36 of the received registration replacement request is forwarded 231 to the token creator register 7. In the first variants the wallet information share 36 of an input token (deleted in list 31) is archived 232 into the token creator register 7.

The token creator registration unit 71 stores 240 the wallet information share 36 in the token creator list 35.

A wallet information derivation process 300 may be performed in the token register 9 and/or in the token creator register 7. Steps of the processes 200, 300 or the processes 200, 300 can at least partly be performed in parallel (e.g. step 310 before step 232 or 250).

The conflict detection unit 92 and/or the token registration unit 91 may detect that a wallet information share 36 is already stored in the token list 31 for the token and receive the stored wallet information share in step 310. Based on the at least one first stored wallet information share and a second received wallet information share the wallet information derivation unit 93 may derive the wallet information of the token wallet having used the token more than once. The derived wallet information 21 may be provided 320 for further steps (block this token wallet, revoke this certificate ...) in the token system 10.

The conflict detection unit 72 and/or the token creator registration unit 71 may detect that a wallet information share is already stored in the token creator list 31 for the token reference of the token and receive the or both wallet information shares 21b, 21d. Alternatively, the token creator register 7, e.g. the derivation unit 73, may detect that based on the stored token independent wallet information shares a wallet information can be derived. Based on the two or more wallet information shares 21b, 21d the wallet information 21 is derived (and provided 320) by wallet information derivation unit 73.

### REFERENCE SIGNS

- 1, 2: secure token wallet
- 8: token issuer unit
- 9: token register
- 10: token system
- 11: token exchange unit
- 12: storage unit
- 15: token
- 16: token registration data
- 17: exchange log data
- 19: interface unit
- 100: token exchange
- 200: token registration

- 21: wallet information
- 21a, 21b, 21c, 21d: wallet information shares
- 16a, 16b, 16c, 16d: token registration data
- 22: wallet certificate
- 23: authentication key
- 24: share generating seed
- 25: token reference
- 100d: token exchange
- 200b, 200d: token registration

- 7: wallet information share register
- 31: token value list
- 32: token reference
- 33: token value
- 35: wallet information share list
- 36: wallet information share
- 37: timestamp

- 40-1, 40-2: token replacement request
- 41: input token data elements
- 42: output token data elements
- 43: replacement signature
- 71: token creator registration unit
- 72, 92: conflict detection unit
- 73, 93: wallet information derivation unit
- 91: valid token registration unit

- 200: token registration process
- 210: replacement request receipt
- 220: token registration
- 231: share forwarding
- 232: share archiving
- 240: share registration
- 250: registration confirmation
- 300: wallet information derivation
- 310: share reception
- 320: wallet information provisioning

## Claims

1. A secure token wallet (1) of a token system (10) including multiple token wallets (1, 2) and a token register (9), comprising
- a token exchange unit (11) configured for exchanging a token with another token wallet, wherein in an offline token exchange (100; 100d) the token exchange unit (11) receives a wallet information of the other token wallet (2) and receives a token (15) from the other token wallet (2); and
- a storage unit (12) configured for storing the received token (15) and token registration data (16d) to be sent to the token register (9);
**characterized in that**
the token exchange unit (11) is configured to select a first wallet information share (21d) from wallet information shares (21a-21d), wherein the wallet information (21) of the other token wallet (2) is derivable only based on two or more of the wallet information shares (21a-21d); and
the token registration data (16d) stored for the received token (15) comprises the first wallet information share (21d).

2. The token wallet (1) of claim 1, **characterized in that** the token exchange unit (11) is configured to generate the wallet information shares (21a-21d) and to select the first wallet information share (21d) from the generated wallet information shares (21a-21d) or is configured to select the first wallet information share (21d) from wallet information shares (21a-21d) and to receive the selected first wallet information share (21d) from the other token wallet (2).

3. The token wallet (1) of one of the preceding claims, **characterized in that** the wallet information shares (21a-21d) are generated based on the wallet information (21) and a share-generating seed (24).

4. The token wallet (1) of one of the preceding claims, **characterized in that**
the wallet information (21) is included in or derived from a certificate (22) of the other token wallet (2); and/or
the wallet information (21) uniquely identifies the other token wallet (2) and/or the owner of the other token wallet (2).

5. The token wallet (1) of one of the claims 3 or 4, **characterized in that** the share-generating seed (24) is a token dependent share-generating seed and/or an exchange independent share-generating seed.

6. The token wallet (1) of one of the preceding claims, **characterized in that**
the first wallet information share (21d) share is pseudo-randomly selected from the wallet information shares (21a-21d); and/or
the first wallet information share (21d) share is selected from the wallet information shares (21a-21d) based on a share-selection seed.

7. The token wallet (1) of one of the preceding claims, **characterized in that** the token registration data (16) for the received token (15) include a token value (33) and/or a wallet information share (36), and preferably a token reference (32).

8. The token wallet (1) of one of the preceding claims, **characterized in that**
the token registration data (16) enable the token wallet (1) to request registration of the first wallet information share (21d) for at least the received token (15) in the token register (9; 7); and/or
the token registration data (16) enable the token wallet (1) to request for one or more further token - created in the other token wallet (2) or received from the other token wallet (2) - registration of the first wallet information share (21d) or of a further wallet information share of respective further wallet information shares.

9. The token wallet (1) of one of the preceding claims, **characterized in that**
the token registration data (16) comprise one or more registration requests (40-1, 40-2), preferably registration replacement requests; and/or
the token registration data (16) enable the token wallet (1) to request registration replacement of m registered input token (15) by registration of n unregistered output token (15) in the token register (9).

10. A token register (9, 7) of a token system (10) including multiple secure token wallets (1, 2), the token register (9, 7) comprising:
a token list (31, 35) storing token information (32, 33, 36),
a registration unit (91, 71) configured for receiving registration data (16) including token information (32, 33, 36) to be stored in the token list (31,35); and
a wallet information derivation unit (93, 73) configured for deriving a wallet information (21) of a token wallet (2) based on the token information (32, 33, 36) stored for a token (15) in the token list (31, 35);
**characterized in that**
after receiving first registration data (16b) of a first token exchange (200b) a first wallet information share (21b) of wallet information shares (21a-21d) is stored in the token list (31, 35) for a token (15), wherein the wallet information (21) of the other token wallet (2) is derivable only based on two or more of the wallet information shares (21a-21d); and
the wallet information derivation unit (93, 73) derives the wallet information (21) after receiving second registration data (16d), including a second wallet information share (21d) of the wallet information shares (21a-21d) for the token (15), of a second, offline token exchange (200d).

11. The token register (9, 7) of claim 10, **characterized in that**
the token information (32, 33, 36) of a token (15) stored in the token list (31, 35) comprise the first wallet information share (21b) and/or a token value (33) and/or a token reference (32); and/or
the wallet information (21) of a token wallet (2) being derivable in the token register (9) only after a double spending of the token (15) by the token wallet (2), particularly after a second sending of the token (15) and/or after a token creation based on the sent token (15) and/or after a second token creation based on the token (15).

12. The token register (9, 7) of claim 10 or 11, **characterized in that**
the registration unit (91) in the token list (31) replaces the token information (32, 33) of at least one input token (41) of a registration replacement request (40-1; 40-2) included in the registration data (16) by the token information of at least one output token (42) of the registration replacement request (40-1; 40-2); and/or
the token register (9, 7) comprises a token value list (31) or a valid token list (31), optionally including the first wallet information share (21d), and/or a wallet information share list (35) or token creator list (35) including a wallet information share information (36) per token (15).

13. The token register (7) of one of claims 10 to 12, **characterized in that**
the token register (7) being a token creator register registering a wallet information share (21b) for the wallet information (21) of the token wallet (2) creating the token (15); and/ or
the registration unit (71) receiving registration data (16, 16b, 16d) from a valid token register (9) and/or from one of the token wallets (1, 2).

14. The token register (9, 7) of one of claims 10 to 13, **characterized in that** the multiple secure token wallets (1, 2) are configured in accordance with one of claims 1 to 9.

15. A system comprising multiple secure token wallets (1,2) in accordance with one of claims 1 to 9 and a token register (9, 7) in accordance with one of claims 10 to 14, preferably a valid token register (9) and/or a token creator register (7).
